# EUROPÄISCHE PATENTSCHRIFT

(11) **EP 1 195 669 B1**
(45) Veröffentlichungstag und Bekanntmachung des Hinweises auf die Patenterteilung: **16.03.2005**
(21) Anmeldenummer: 01120469.0
(22) Anmeldetag: 28.08.2001
(51) Int. Cl.: G05D 1/02, B60K 31/00

(54) **Verfahren zur Längsregelung eines Fahrzeuges bei dem Informationen eines Navigationssystems erfasst werden**
Method for a longitudinal control of a vehicle in which data from a navigation system is acquired
Procédé de commande longitudinale d'un véhicule dans lequel des informations d'un système de navigation sont captées

(30) Priorität: 27.09.2000 DE 10047749
(43) Veröffentlichungstag der Anmeldung: 10.04.2002
(73) Patentinhaber: Bayerische Motoren Werke Aktiengesellschaft, 80809 München (DE)
(72) Erfinder: Prömm, Uwe, 80686 München (DE); Naab, Karl, Dr., 85457 Wörth (DE); Prestl, Willibald, Dr., 82223 Eichenau (DE); Steinle, Joachim, Dr., 80993 München (DE)

(56) Entgegenhaltungen:
- DE-A- 10 004 525
- DE-A- 19 704 854

## Beschreibung

Die Erfindung bezieht sich auf ein Verfahren zur Längsregelung eines Fahrzeuges, bei dem Informationen eines Navigationssystems erfasst werden, nach dem Oberbegriff des Patentanspruchs 1.

Ein derartiges Verfahren zur Längsregelung ist beispielsweise aus der DE 196 38 511 A1 bekannt. Dabei handelt es sich insbesondere um Geschwindigkeitsregelsysteme, die die Antriebs- und/oder Bremssysteme eines Fahrzeuges in der Weise ansteuern, dass entweder eine Sollgeschwindigkeit oder ein Sollabstand zum vorausfahrenden Fahrzeug eingestellt wird. Bei dem aus der DE 196 38 511 A1 bekannten Verfahren werden derartige Geschwindigkeitsregelsysteme mit Informationen eines ebenfalls im Fahrzeug vorhandenen Navigationssystem beliefert. Hierzu kann beispielsweise ein dem Längsregelsystem zugeordnetes Steuergerät eine Schnittstelle zur Elektronik des Navigationssystems aufweisen.

Die bekannten Längsregelsysteme sind bisher so ausgelegt (Normalbetrieb), dass eine automatische fest vorgegebene Längsbeschleunigung auf eine vom Fahrer gesetzte Sollgeschwindigkeit vorgenommen wird, wenn eine Folgefahrt beendet wird. Eine Folgefahrt mit vorgegebenem Sollabstand wird entweder beendet, wenn das vorausfahrende Fahrzeug die Spur wechselt oder wenn das eigene Fahrzeug auf eine freie Spur wechselt. Bisher ist selbst unter Verwendung von Informationen eines Navigationssystems keine verlässliche Erkennung eines Spurwechsels möglich, da erstens die im Navigationssystem abgelegten Straßennetze Fehlertoleranzen aufweisen und zweitens der bisher verwendete Sensor (GPS) zur Positionsbestimmung des eigenen Fahrzeuges noch zu ungenau ist.

Es ist Aufgabe der Erfindung, unter Verwendung von Informationen des Navigationssystems bestimmte Spurwechselsituationen abzuschätzen.

Diese Aufgabe wird durch die Merkmale des Patentanspruchs 1 gelöst. Vorteilhafte Weiterbildungen der Erfindung sind die Gegenstände der abhängigen Ansprüche.

Besonderes Augenmerk wird beim Gegenstand der Erfindung auf einen Spurwechsel vor einer Autobahnausfahrt in Richtung der Ausfahrt gerichtet, in der eine unerwünschte Längsbeschleunigung verhindert werden soll, da in dieser Situation eher ein Verzögerungswunsch zu erwarten ist.

Erfindungsgemäß wird bei einem Längsregelvorgang aufgrund eines vorgegebenen Sollabstandes zu einem vorausfahrenden Fahrzeug (Folgefahrt) auf einer Autobahn mittels der Informationen des Navigationssystems die Wahrscheinlichkeit ermittelt, mit der der Fahrer beabsichtigt, die nächste Autobahnausfahrt anzusteuern ("Ausfahrwahrscheinlichkeit"). Eine Längsbeschleunigung wird verhindert oder gegenüber dem Normalbetrieb zumindest vermindert vorgenommen, wenn das vorausfahrende Fahrzeug nicht mehr erkannt wird und die Wahrscheinlichkeit größer als eine vorgegebene Schwelle ist. Die Verminderung der Längsbeschleunigung kann ebenso wie die Wahrscheinlichkeits-Schwelle variabel, z. B. abhängig vom Abstand des Fahrzeuges von der Autobahnausfahrt, oder fest vorgegeben werden.

Vorzugsweise wird mittels der Straßenkarte eines Navigationssystems, die üblicherweise aus einer Vielzahl von Streckenabschnitten zusammengesetzt ist, zu Beginn eines jeweils aktuellen definierten Streckenabschnitts überprüft, ob darin eine Autobahnausfahrt vorgesehen ist und ob die Autobahnausfahrt auf der einprogrammierten Route liegt und/oder ob mindestens eine Betriebsgröße des Fahrzeugs auf ein Verlassen der Autobahn hinweist. Derartige Betriebsgrößen sind z. B. die Blinkerbetätigung oder die momentane Fahrzeuggeschwindigkeit. Die Ausfahrwahrscheinlichkeit wird höher sein, wenn der Fahrer den Blinker in Richtung Ausfahrt betätigt und/oder die Ausfahrt Bestandteil der vom Fahrer im Navigationssystem programmierten Route ist. Weiterhin deutet beispielsweise eine niedrige Fahrzeuggeschwindigkeit ebenfalls auf eine höhere Ausfahrwahrscheinlichkeit hin.

Vorzugsweise wird das erfindungsgemäße Verfahren in ein ohnehin für ein Längsregelsystem vorgesehenes Steuergerät integriert. Hierzu muss lediglich eine Schnittstelle zum Navigationssystem hergestellt werden.

Die erfindungsgemäße Abfrage und Verarbeitung von Informationen aus dem Navigationssystem zum aktuellen und zukünftigen Kontext erlaubt eine adaptive an die jeweilige Situation angepasste und fahrertypische Regelung der Längsdynamik mit einem Längsregelsystem. Die Funktionsqualität und der Fahrkomfort werden gesteigert.

In der Zeichnung ist ein Ausführungsbeispiel der Erfindung dargestellt. Es zeigt
- Fig. 1: ein Situationsbeispiel innerhalb eines definierten Straßenabschnitts,
- Fig. 2: die Grundstruktur des Konzepts zur situationsangepassten Längsdynamikregelung
- Fig. 3: einen möglichen Verlauf der Ausfahrwahrscheinlichkeit abhängig vom Abstand des Fahrzeugs zu einer Autobahnausfahrt und

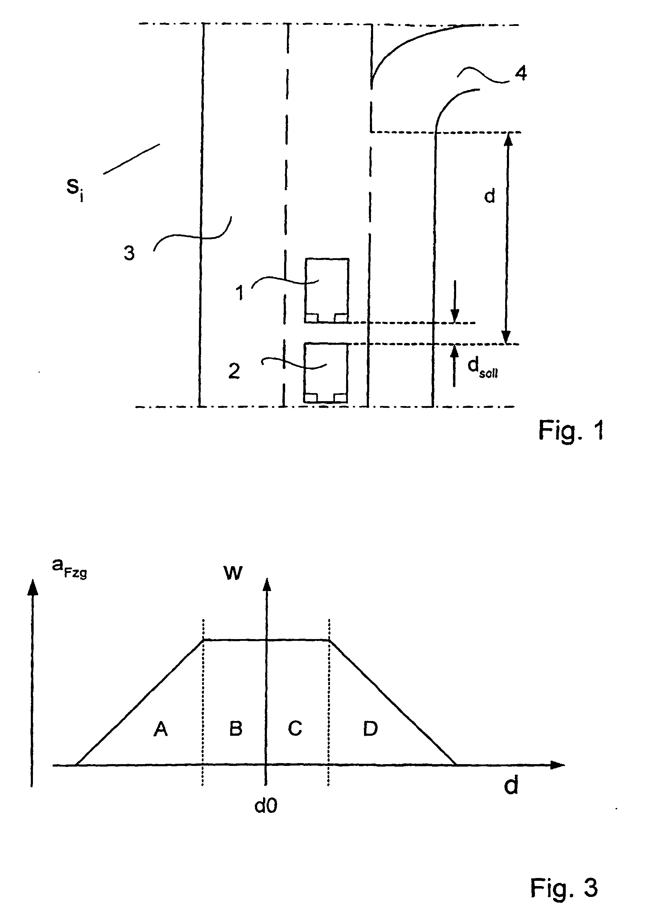

In Fig. 1 ist beispielhaft ein aktueller definierter Streckenabschnitt sᵢ dargestellt, der einen Autobahnausschnitt 3 mit einer Ausfahrt 4 enthält. Auf dem Streckenabschnitt sᵢ folgt das Fahrzeug 2 mit vorgegebenem Sollabstand dₛₒₗₗ einem vorausfahrenden Fahrzeug 1. Der Abstand d zeigt den momentanen Ist-Abstand des Fahrzeugs 2 von der Ausfahrt 4 an.

Das im Fahrzeug 2 enthaltene erfindungsgemäße Längsregelsystem hat zu entscheiden, wie groß die Wahrscheinlichkeit (Ausfahrwahrscheinlichkeit) w ist, mit der der Fahrer des Fahrzeugs 2 die Ausfahrt 4 befahren will; denn ein Spurwechsel kann nicht eindeutig erkannt werden.

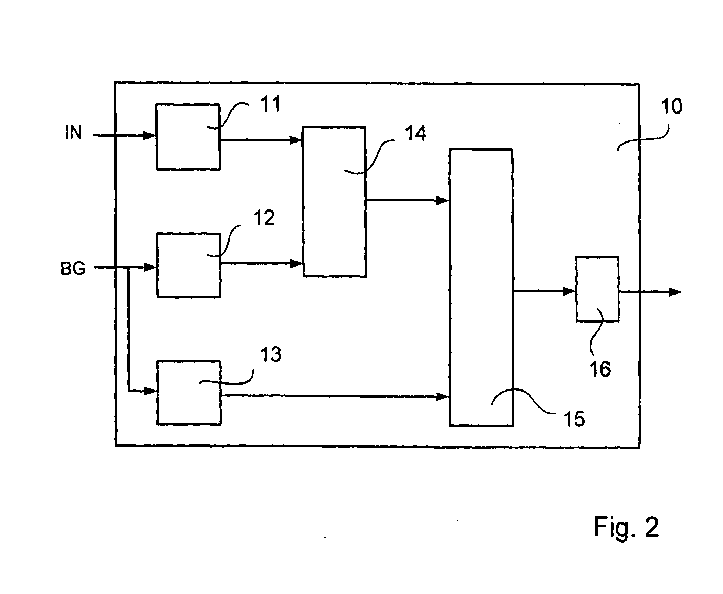

Hierzu wertet das in Fig. 2 näher dargestellte Steuergerät 10 des Längsregelsystems im Fahrzeug 2 zum einen Informationen IN des Navigationssystems sowie weitere Betriebsgrößen BG des Fahrzeugs 2 aus.

Die Informationen IN können beispielsweise die Ist-Position des Fahrzeugs 2, die Straßenklasse (Autobahn, nicht Autobahn), die Länge des jeweiligen Streckenabschnittes (sᵢ), das Vorhandensein einer Autobahnausfahrt im Streckenabschnitt und die Information sein, ob eine/die Autobahnausfahrt Bestandteil der vom Fahrer programmierten Route ist. Die Betriebsgrößen BG können z. B. ein Blinkersignal, ein Lenkwinkelsignal, ein Fahrzeuggeschwindigkeitssignal, ein Fahrpedalgebersignal oder Betätigungssignale des dem Längsregelsystem zugeordneten Bedienhebels sein.

Im Vorausschau-Block 11 wird zu Beginn des Streckenabschnitts s, geprüft, ob eine Autobahnausfahrt 4 vorhanden ist und ob diese Bestandteil der Route ist. Im Ausfahrwunschermittler 12 wird überprüft, ob die Fahrzeuggeschwindigkeit hoch oder niedrig ist und ob der Blinker in Richtung Ausfahrt 4 gesetzt ist. Die Ausfahrwahrscheinlichkeit w wird im Berechnungsblock 14 abhängig vom Ergebnis dieser Abfragen ermittelt.

Das Konzept zur Berechnung der Ausfahrwahrscheinlichkeit w wird am Beispiel der sogenannten Basiswahrscheinlichkeit erläutert (Fig. 3). Sie ist abhängig von der Positionierungsgenauigkeit (Qualität des Navigationssystems) und vom Abstand d des Fahrzeugs von der Ausfahrt 4. Beim Abstand d0 befindet sich theoretisch die Autobahnausfahrt 4. Wesentlich ist der sogenannte Entscheidungsabschnitt A (vor der theoretischen Ausfahrt). Wenn die Folgefahrt beendet ist, kann beispielsweise im Abschnitt A (für vor der theoretischen Ausfahrt) bzw. D (für nach der theoretischen Ausfahrt) proportional zum Verlauf der Wahrscheinlichkeit w die Längsbeschleunigung a_{Fzg} mit zunehmender bzw. abnehmender Reduzierung vorgenommen werden. In den Abschnitten B bzw. C kann die Längsbeschleunigung völlig verhindert werden, wenn das vorausfahrende Fahrzeug 1 nicht mehr erkannt wird.

Im Entscheider 15 (Fig. 2) wird die Reduzierung der Längsbeschleunigung verhindert, wenn über den Dynamikbedarfermittler 13 vom Fahrer der Wunsch über mehr Antriebsleistung erfasst wird (z. B. über das Gaspedal oder über das dem Längsregelsystem zugeordnete Bedienelement zum Erhöhen der Setzgeschwindigkeit). Im Parameteradaptionsblock 16 werden die Reglerparameter für die zu regelnden Größen (hier: Sollgeschwindigkeit bzw. Sollbeschleunigung und Sollbeschleunigungsgradient) entsprechend dem Ausgang des Entscheiders 15 vorgegeben und über den Regler an die Aktuatoren ausgegeben.

## Patentansprüche

1. Verfahren zur Längsregelung eines Fahrzeuges, bei dem Informationen eines Navigationssystems erfasst werden und bei dem abhängig von den Informationen des Navigationssystems ein Sollwert mindestens eines Parameters zur Längsregelung bestimmt wird, **dadurch gekennzeichnet, dass** bei einem Längsregelvorgang aufgrund eines vorgegebenen Sollabstandes (dₛₒₗₗ) zu einem vorausfahrenden Fahrzeug (1) auf einer Autobahn (3) mittels der Informationen des Navigationssystems eine Ausfahrwahrscheinlichkeit (w) ermittelt wird, und dass eine Längsbeschleunigung (a_{Fzg}) verhindert oder zumindest vermindert vorgenommen wird, wenn das vorausfahrende Fahrzeug (1) nicht mehr erkannt wird und die Ausfahrwahrscheinlichkeit (w) größer als eine vorgegebene Schwelle ist.

2. Verfahren nach Patentanspruch 1, wobei zur Ermittlung der Ausfahrwahrscheinlichkeit (w) zu Beginn eines jeweils aktuellen definierten Streckenabschnitts (sᵢ) überprüft wird, ob eine Autobahnausfahrt (4) vorgesehen ist und ob die Autobahnausfahrt (4) auf einer einprogrammierten Route liegt und/oder ob mindestens eine Betriebsgröße des Fahrzeugs (2) auf einen Ausfahrwunsch des Fahrers hinweist.

3. Steuergerät mit Mitteln zur Durchführung des Verfahrens nach Patentanspruch 1 oder 2.

## Claims

1. A method for the longitudinal control of a vehicle, in which data from a navigation system is acquired and in which, depending on the data from the navigation system, a desired value of at least one parameter is determined for longitudinal control, **characterised in that**, in a longitudinal control process. an exit probability (w) is determined by means of the data from the navigation system on the basis of a predetermined desired distance (d_{desired}) from a vehicle (1) driving in front on a motorway (3), and **in that** a longitudinal acceleration (a_{vehicle}) is prevented or is at least carried out to a reduced extent, when the vehicle (1) driving in front is no longer recognised and the exit probability (w) is greater than a predetermined threshold.

2. A method according to claim 1, wherein to determine the exit probability (w) at the beginning of a respective current defined route section (sᵢ) a check is is carried out as to whether a motorway exit (4) is provided and whether the motorway exit (4) is on a programmed-in route and/or whether at least one operating variable of the vehicle (2) indicates an exit wish of the driver.

3. Control apparatus with means for carrying out the method according to claim 1 or 2.

## Revendications

1. Procédé de régulation longitudinale d'un véhicule, selon lequel on saisit des informations d'un système de navigation, et en fonction des informations de ce système on définit la valeur de consigne d'au moins un paramètre destiné à la régulation longitudinale,
**caractérisé en ce que**
dans une opération de régulation longitudinale basée sur une distance de consigne prédéfinie (dₛₒₗₗ) par rapport au véhicule (1) circulant devant sur une autoroute (3), une probabilité de sortie (w) est établie à partir des informations du système de navigation, et une accélération longitudinale (a_{Fzg}) est empêchée ou au moins s'effectue en étant au moins diminuée si le véhicule (1) circulant devant n'est plus détecté et si la probabilité de sortie (w) dépasse un seuil prédéfini.

2. Procédé de régulation selon la revendication 1
**caractérisé en ce que**
pour établir la probabilité de sortie (w) on examine au début de la section d'autoroute actuelle définie (sᵢ) si une sortie d'autoroute (4) est prévue et si cette sortie se trouve sur la route programmée, et/ou si au moins une grandeur du fonctionnement du véhicule (2) indique que le conducteur désire sortir.

3. Appareil de commande comportant des moyens de mise en oeuvre du procédé selon la revendication 1 ou 2.
